# DEMANDE DE BREVET EUROPEEN

(11) **EP 1 245 151 A1**
(43) Date de publication de la demande: **02.10.2002**
(21) Numéro de dépôt: 02366004.6
(22) Date de dépôt: 28.03.2002
(51) Int. Cl.: A01M 29/00

(54) **Dispositif d'effarouchement et d'empêchement pour tout volatil de se poser sur les rebords des chéneaux, appuis de fenêtres ou toute avancée des façades d'immeubles, de maisons, ou toute construction**

(30) Priorité: 28.03.2001 FR 1004195
(71) Demandeur: Antoni-Paquel, Didier, 54700 Vittonville (FR); SàRL C.T.L.E. Group, 54700 Vittonville (FR)
(72) Inventeur: Antoni-Paquel, Didier, 54700 Vittonville (FR); Vigneron, Guy, 57970 Stuckange (FR)

(57) **Abrégé**

Dispositif destiné à effaroucher et à empêcher les oiseaux, pigeons et tout volatil de se poser sur les rebords des chéneaux, fenêtres ou toute avancée par rapport au plan vertical des façades. L'invention permet de protéger les façades et trottoirs de toutes déjcctions, fientes ou excréments de ces volatils. Il est pratiquement invisible et totalement inoffensif pour les oiseaux.

Le dispositif comporte deux supports d'extrémités constitués chacun par une embase percée d'au moins deux trous (1) sur laquelle est soudée une plaque percée d'au moins deux trous (2), parallèlement à la plus grande dimension de l'embase (1) et dans l'axe central. Sur un des supports d'extrémité (1), deux ou plusieurs ressorts (6) viennent prendre place dans les trous (4) par introduction d'une extrémité des ressorts (6); le fil (7) est noué ou serti sur l'autre extrémité des ressorts (6). La deuxième extrémité du fil est nouée au niveau des trous (4) du support d'extrémité (2). Un ou plusieurs supports intermédiaires sont placées à distance égale les unes des autres entre les deux supports d'extrémité. Elles comprennent une base (8) de forme identique à l'embase (1) et une plaque (9) soudée perpendiculairement à la base (8). Cette pièce (9) est percée d'au moins deux trous (10) permettant le passage du fil ou des fils et l'accrochage d'un ressort (6).

## Description

La présente invention concerne un dispositif destiné à effaroucher et à empêcher les oiseaux, pigeons et tout volatil de se poser sur les rebords des chéneaux, fenêtres ou toute avancée par rapport au plan vertical des façades.

Cette invention permet de protéger les façades et trottoirs de toutes déjections, fientes ou excréments de ces volatils.

Actuellement deux systèmes sont utilisés :
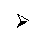 Le système électromagnétique, mais il a l'inconvénient d'avoir besoin d'une source électrique et son efficacité est réduite à quelques dizaines de centimètres.
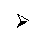 Le système mécanique constitué par un réseau de pointes fixées sur un support étant collé ou vissé. Inesthétique, il présente de surcroît un risque de blessure pour l'oiseau essayant de se poser.
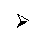 Il existe des systèmes à cable tels que ceux décrits dans les documents GB 2 338 000 A (HUDSON FRASER), US 5 092 088 A (WAY MICHEL F W ) et DE 36 36 201 A (NIEWOLLIK PETER)

Le dispositif selon l'invention ne présente aucun de ces inconvénients. Il est pratiquement invisible et totalement inoffensif pour les oiseaux.

Il est constitué d'un ensemble de plusieurs fils séparés les uns des autres de quelques centimètres et tendus parallèlement au bord extérieur au chéneau coté façade et opposé à la toiture ou à la plus grande longueur du rebord de fenêtre ou avancé à la façade.

Chaque fil dont le diamètre ne permet pas au volatil de se tenir car trop faible pour que les doigts de ses pattes puissent l'enserrer sont d'une matière imputrescible type de ceux utilisés par les pêcheurs pour leur canne à pêche (monofilament nylon ou tressé soie).

Ces fils sont maintenus par deux supports pouvant être espacés l'un de l'autre de 6 metres maximum. Un support entretoise devant se trouver à mi-distance.

Les fils sont tendus par un ressort maintenant une tension suffisante pour que le poids du volatil essayant de se poser soit sans effet sur cette tension.

Les supports et entretoises sont en matière inox galvanisé ou toute autre matière métallique ou synthétique de manière à s'harmoniser avec le bâtiment tout en étant pratiquement invisible à l'oeil.

Les supports et entretoises sont collés ou / et vissés.

Les dessins annexés illustrent l'invention.

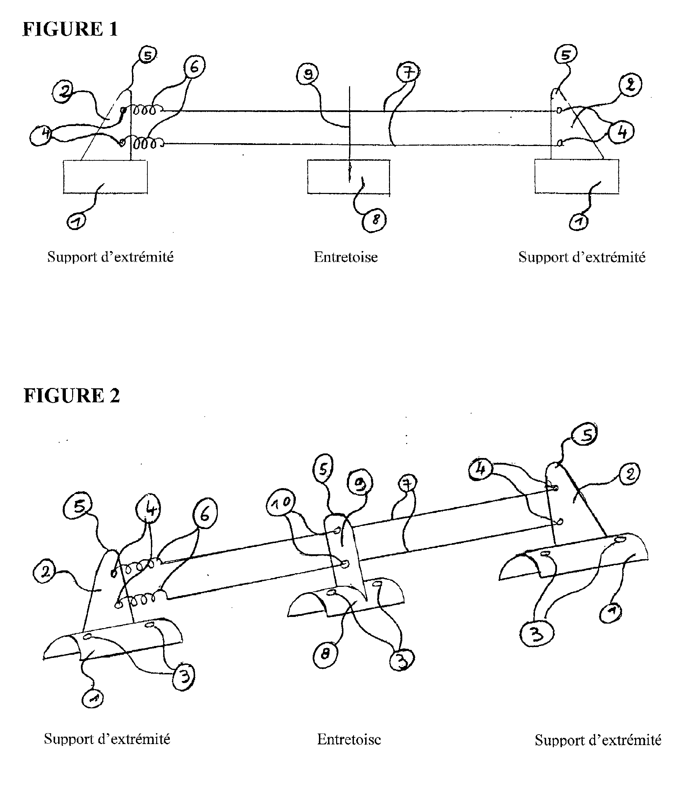

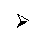 La figure 1 représente l'ensemble du dispositif de l'invention monté en vue de face.
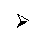 La figure 2 représente les supports d'extrémité et entretoise.

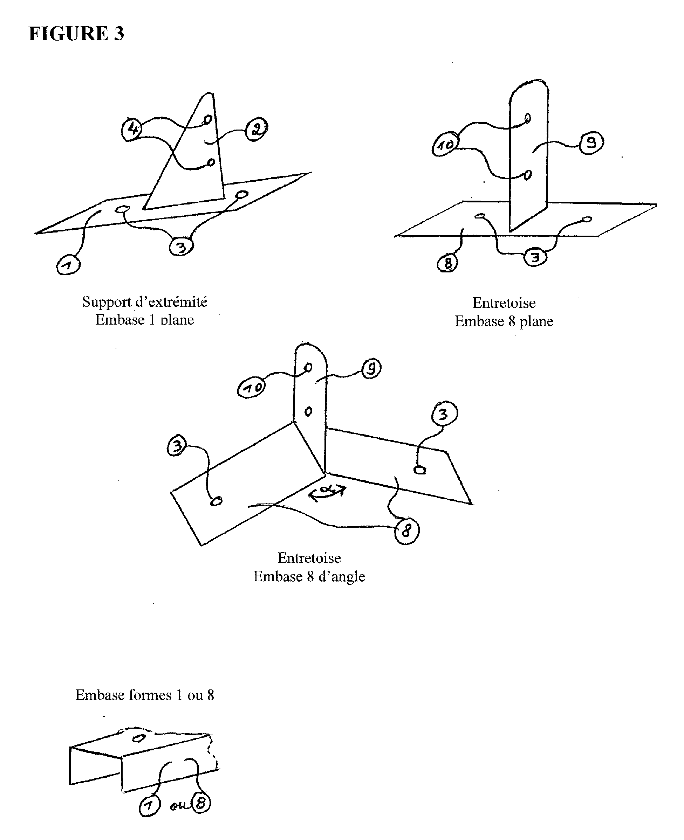

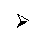 La figure 3 représente les variantes des supports d'extrémité, entretoises et renvois d'angles.

En référence à ces dessins, le dispositif comporte deux supports d'extrémités constitués chacun par une embase (1) sur laquelle est soudée une plaque (2), parallèlement à la plus grande dimension de l'embase (1) et dans l'axe central.

L'embase 1 est percée de deux trous (3) afin de pouvoir fixer cette pièce sur le chéneau par des vis ou rivets.

La plaque (2) est percée de deux trous (4) séparés de quelques centimètres. Son sommet (5) est de forme arrondie ou biseautée.

Sur un des supports d'extrémité (1), deux ou plusieurs ressorts (6) viennent prendre place dans les trous (4) par introduction d'une extrémité des ressorts (6) ; le fil (7) est noué ou serti sur l'autre extrémité des ressorts (6). La deuxième extrémité du fil est noué au niveau des trous (4) du support d'extrémité (2), opposé à celui sur lequel sont fixés les ressorts (6). En référence à ces dessins le dispositif de l'invention comprend également une ou plusieurs entretoises placées à distance égale et au maximun de 1,50 m les unes des autres entre les deux supports d'extrémité. Cette ou ces entretoises sont constituées chacune par deux pièces soudées l'une sur l'autre. Cette entretoise comprend une base (8) de forme identique à l'embase (1) et une plaque (9) soudée perpendiculairement à la base (8). Cette pièce (9) est percée d'au moins deux trous (10) permettant le passage du fil.

L'ensemble du système représentant l'invention est constitué de façon indivisible par les supports d'extrémité et les entretoises.

A titre d'exemple non limitatif les supports d'extrémités et l'entretoise auront comme dimensions, de l'ordre de 10 cm pour longueur et 7,5 cm pour hauteur. Les deux supports d'extrémités peuvent être placés à plusieurs dizaines de mètres l'un de l'autre, les entretoise se trouvant placées à distance égale et au maximun de 1,50 m les unes des autres entre les deux supports d'extrémité.

## Revendications

1. Dispositif d'effarouchement et d'empêchement pour les oiseaux et tout volatil de se poser sur les rebords des chéneaux, appuis de fenêtre ou toute autre avancée par rapport au plan vertical des façades d'immeubles, maisons, monuments ou toute construction, comportant des supports d'extrémités (2) des fils (7) et ressorts (6) de tension. Ce dispositif est **caractérisé en ce que** les supports d'extrémités (2) sont constitués d'une embase (1) de forme arrondie, plane ou en U et d'une plaque (2) soudée sur l'embase (1) et **en ce qu'**il comporte des supports intermédiaires constitués d'une base (8) de forme arrondie, plane ou en U et d'une plaque (9) soudée perpendiculairement à la plus grande longueur de la base (8).

2. Dispositif selon la revendication 2, et la revendication 3, en ce que les embases (1) et la base (8) soiet percées de deux ou plusieurs trous (3) permettant leurs fixations.

3. Dispositif selon la revendication 2. **caractérisée en ce que** la plaque (2) soit percée d'au moins deux trous pour placer aux extrémités des ressorts (6) ou le noeud de maintien des fils (7).

4. Dispositif selon la revendication 3, **caractérisée en ce que** la plaque (9) soit percée d'au moins deux trous (10) permettant le passage des fils (7) et / ou la fixation d'au moins un ressort (6)
